# EUROPEAN PATENT APPLICATION

(11) **EP 4 206 961 A1**
(43) Date of publication of application: **05.07.2023**
(21) Application number: 22214998.1
(22) Date of filing: 20.12.2022
(51) Int. Cl.: G06F 21/32, G06F 21/33, G06F 21/64, G06V 40/30, H04L 9/32

(54) **METHOD OF SIGNING A DIGITAL DOCUMENT COMBINING A HANDWRITTEN SIGNATURE AND ELECTRONIC SIGNING TECHNOLOGY**

(30) Priority: 31.12.2021 LT 2021578
(71) Applicant: Lietuvos ir Vokietijos UAB "LIREMA", 08221 Vilnius (LT)
(72) Inventor: SAMSONOVAS, Vytautas, 08355 Vilnius (LT); BISTRICKIS, Andrius, 08211 Vilnius (LT); DIMAVICIUS, Simonas, 08455 Vilnius (LT); SLEKYS, Vytautas, 02192 Vilnius (LT); SOCEVICIUS, Mindaugas, 09235 Vilnius (LT)
(74) Representative: Pranevicius, Gediminas

(57) **Abstract**

The invention relates to the method of electronic signing of digital documents with a qualified electronic signature by combining an image of a handwritten signature and electronic signing technology ensuring the integrity and content authenticity of signed documents. The method comprises the steps of initiating an application software to sign a digital document by hand, where the software opens a user's interface window on an electronic device having a touch screen that allows the user to view the content of the document to be signed and to sign it; after the user has signed and confirmed the action by pressing a button, capturing the handwritten signature entered in the electronic device by the user's input means and associating it with the electronic certificates in order to ensure the origin and integrity of the data; placing a stamp to the signed document showing the user's handwritten signature's image and related electronic signature information.

## Description

### FIELD OF THE INVENTION

The invention relates to the creation and use of qualified electronic handwritten signatures. The goal of the invention is to combine the image of the electronic handwritten signature and the technology of qualified electronic signing technology to sign digital documents by hand, ensuring their integrity and authenticity of a content.

### BACKGROUND ART

Handwritten signatures have been widely used to sign paper documents and/or confirm various transactions. However, the digitization of many areas and processes of life has made it necessary to use digital electronic signatures. Electronic signatures perform not only the function of signing, but also of locking the content of the document. The most advanced, in terms of security, is a qualified electronic signature, created using a qualified electronic signature creation device, and confirmed by a qualified electronic signature, the data of which is recorded in each signed document at the time of document signing. This ensures the integrity of the signed document, the authenticity of the content, etc.

As a standard, when using a qualified electronic signature, the signer instead of a handwritten signature enters only the password of the electronic signature known to him during the signing, and thus the document is signed. I.e. after entering the password in a pre-prepared electronic device, a certificate of electronic signature is recorded in the document. Documents can be signed by using the selected electronic signature means, such as personal ID card, mobile signature, cryptographic USB stick, etc. In addition, the signing devices must have an additional application software installed for the electronic signature to work. It is relatively complicated to use such a signing technique for a wide range of ordinary users. Therefore, it was decided to look for ways that would allow an ordinary user to sign a digital document by hand in an uncomplicated, fast and safe way, without a part of the aforementioned IT infrastructure.

United Kingdom Patent Application No. GB2397153 is dedicated to this issue. It describes a system for accessing and enabling digital certificates using a handwritten signature. The signature is entered by hand through an electronic device that captures the signature, then processes it to determine its validity against the stored electronic handwritten signature, unlocking and enabling the use of the digital certificate. If the transaction is allowed, the digital certificates will sign the document, and the electronic signature can be displayed on the signed document if desired by the application or the user.

### SUMMARY OF THE INVENTION

The present invention provides an alternative solution for hand-signing digital documents and essentially allows users to sign digital documents by hand, logically linking the signature to digital certificate technology, thus ensuring the integrity and authenticity of the content of the signed electronic document. The invention uses a simple, handwritten electronic signature and certificates of qualified electronic signatures. A handwritten signature can be captured by any external device such as PDA, smartphone, tablet, laptop, etc. - that has a touch screen and can accept and capture a handwritten signature.

In contrast to the prior art, according to the present invention, during the signing process, the handwritten signature is represented in the electronic stamp which appears on the document to be signed, which associates the person's handwritten signature's image with the related qualified electronic signature information. A handwritten signature is saved as an image-type file which can also include date and time data to allow for advanced identification of handwritten signatures.

### DETAILED DESCRIPTION OF THE INVENTION

Electronic devices such as PDAs, tablets, smart phones, laptops with touch screens can be used to accept handwritten signatures. The touch screen serves as an input and display module for sensing the user's touch and receiving input data. The touch screen can detect the touch of a user's finger or electronic pen. User's input, such as a handwritten signature, is converted to an image and saved.

During the user's signature process, the handwritten signature is displayed in the stamp appearing on the document to be signed, which links the image of the person's handwritten signature and the related information of a qualified electronic signature. A handwritten signature is saved as an image-type file which can also include date and time data to allow for advanced identification of handwritten signatures.

The application software for processing the handwritten signature includes the steps of registering the handwritten signature entered by the user's input means on the electronic device, and capturing the handwritten signature data in order to verify the handwritten signature.

The signing of a digital document, combining a handwritten signature and certificates of qualified electronic signatures, is carried out in the following way:
1) the user initiates an electronic signing by hand of a digital document displayed on a touch screen device - PDA, tablet, smartphone, laptop, etc. The application software opens a user interface window that allows viewing the contents of the document to be signed, and the user signs it by hand;
2) after the user signs the document and confirms the signing by pressing a button, one-time registration of the handwritten signature and data fixation and locking of the document's content occurs using qualified electronic singning technology, when the user's handwritten signature is associated with electronic singnaturel certificates or is logically linked to them in order to ensure the origin and integrity of the signature;
3) the signed document displays a stamp that links the image of the user's handwritten signature and the related electronic signing information. The stamp is visually visible, the location of its display can be determined as needed. One or more users can sign the document using the described method; depending on the number of users who sign the document, the corresponding amount of electronic signature stamps is provided.

## Claims

1. A method of signing a digital document by hand which includes the combination of a handwritten signature image and electronic signing technology, **characterized by** including the following steps:
- initiating an application software for signing a digital document, where the software opens an interface window on the user's electronic device having a touch screen, allowing to view the content of the document to be signed and to sign it by hand;
- after the user signs manually the document and confirms the action by pressing a confirmation button, capturing the image of the handwritten signature and connecting the handwritten signature to other electronic data, i.e. electronic signature certificates to ensure the origin and integrity of the user's input data;
- placing a stamp on the signed document representing the image of the user's handwritten signature and related electronic signature information.

2. The method according to claim 1, **characterized by** representing the handwritten signature in the qualified signature stamp as an image-type file, optionally including date and time data used for qualified identification of handwritten signatures.

3. The method according to any of the preceding claims, **characterized by** enabling the user to sign a digital document by hand without using an electronic user's identification medium such as an ID card, a cryptographic USB stick, etc., but using an application software and an electronic device with a touch screen allowing to ensure the integrity of the signed document and the authenticity of the content.
